# EUROPEAN PATENT APPLICATION

(11) **EP 3 943 305 A1**
(43) Date of publication of application: **26.01.2022**
(21) Application number: 21183234.0
(22) Date of filing: 01.07.2021
(51) Int. Cl.: B33Y 80/00, F28F 7/02, F28D 7/02, F28D 9/04

(54) **SPIRAL HEAT EXCHANGER WITH MONOLITHIC PHASE CHANGE MATERIAL CHAMBER**

(30) Priority: 22.07.2020 US 202016935470
(71) Applicant: Hamilton Sundstrand Corporation, Charlotte, NC 28217-4578 (US)
(72) Inventor: ZAFFETTI, Mark A., Suffield 06078 (US); STRANGE, Jeremy M., Windsor 06095 (US)
(74) Representative: Dehns

(57) **Abstract**

A heat exchanger and a method of assembling the heat exchanger involve a monolithic main body (110) extending along an axis from a first end to a second end. The heat exchanger includes a plurality of flow channels (420) to channel a first material from an inlet to an outlet. Each of the plurality of flow channels (420) traverse a spiral flow path from the inlet at a center of the main body to the outlet at an exterior surface of the main body, and the plurality of flow paths are aligned along the axis. The heat exchanger also includes a plurality of passages (310) to hold a second material, each passage extending along the axis from the first end to the second end. A first side and a second side, opposite the first side, of each of the passages (310) is defined by the spiral flow path of the plurality of flow channels (420).

## Description

### BACKGROUND

Exemplary embodiments pertain to the art of heat exchangers and, in particular, to a spiral heat exchanger with a monolithic phase change material chamber.

A heat exchanger is a device that transfers heat by conduction between two materials that are not in direct contact. Heat exchangers are used in a number of applications including for environmental temperature control and temperature regulation of components. Typically, two materials at different temperatures flow through adjacent chambers of a heat exchange device.

### BRIEF DESCRIPTION

In one embodiment, a heat exchanger includes a monolithic main body extending along an axis from a first end to a second end, and a plurality of flow channels to channel a first material from an inlet to an outlet, each of the plurality of flow channels traversing a spiral flow path from the inlet at a center of the main body to the outlet at an exterior surface of the main body. The plurality of flow paths are aligned along the axis. The heat exchanger also includes a plurality of passages to hold a second material, each of the plurality of passages extending along the axis from the first end to the second end. A first side and a second side, opposite the first side, of each of the passages is defined by the spiral flow path of the plurality of flow channels.

Additionally or alternatively, in this or other embodiments, the heat exchanger also includes a first cover defining a first chamber at the first end of the main body and a second cover defining a second chamber at the second end of the main body.

Additionally or alternatively, in this or other embodiments, the heat exchanger also includes a first port into the first chamber through the first cover and a second port into the second chamber through the second cover.

Additionally or alternatively, in this or other embodiments, the first port and the second port introduce the second material into the plurality of passages.

Additionally or alternatively, in this or other embodiments, the heat exchanger also includes a first rim integrally formed at the first end of the main body and a second rim integrally formed at the second end of the main body.

Additionally or alternatively, in this or other embodiments, the first rim is fastened to the first cover and the second rim is fastened to the second cover.

Additionally or alternatively, in this or other embodiments, the inlet for the plurality of flow channels extends through the first cover.

Additionally or alternatively, in this or other embodiments, the heat exchanger also includes inputs for the plurality of flow channels along the axis of the inlet.

Additionally or alternatively, in this or other embodiments, a cross-sectional shape of the inputs is one shape for all of the inputs or different shapes for different ones of the inputs.

Additionally or alternatively, in this or other embodiments, the outlet for the plurality of flow channels extends through the first cover.

Additionally or alternatively, in this or other embodiments, the heat exchanger also includes outputs for the plurality of flow channels along the axis of the outlet.

Additionally or alternatively, in this or other embodiments, a cross-sectional shape of the outputs is one shape for all of the outputs or different shapes for different ones of the outputs.

Additionally or alternatively, in this or other embodiments, a cross-sectional shape of the plurality of flow channels is one shape or more than one shape.

Additionally or alternatively, in this or other embodiments, a width of the plurality of passages, which is defined for each of the plurality of passages as a distance between the first side and the second side, is one value for all of the plurality of passages or a different value for different ones of the plurality of passages.

In another embodiment, a method of assembling a heat exchanger includes forming a monolithic main body extending along an axis from a first end to a second end, the main body including a plurality of flow channels configured to channel a first material from an inlet to an outlet, each of the plurality of flow channels traversing a spiral flow path from the inlet at a center of the main body to the outlet at an exterior surface of the main body. The plurality of flow paths are aligned along the axis, and the main body including a plurality of passages to hold a second material, each of the plurality of passages extending along the axis from the first end to the second end. A first end and a second end, opposite the first end, of each of the passages is defined by the spiral flow path of the plurality of flow channels. The method also includes fastening a first cover at the first end of the main body, and fastening a second cover at the second end of the main body.

Additionally or alternatively, in this or other embodiments, the method also includes integrally forming a first rim at the first end of the main body and a second rim at the second end of the main body. The first rim is fastened to the first cover and the second rim is fastened to the second cover, and the fastening the first cover defines a first chamber at the first end of the main body and the fastening the second cover defines a second chamber at the second end of the main body.

Additionally or alternatively, in this or other embodiments, the method also includes forming a first port in the first cover that extends into the first chamber through the first cover and forming a second port in the second cover that extends into the second chamber through the second cover.

Additionally or alternatively, in this or other embodiments, the forming the monolithic main body includes forming inputs for the plurality of flow channels along the axis of the inlet, wherein a cross-sectional shape of the inputs is one shape for all of the inputs or different shapes for different ones of the inputs, and forming outputs for the plurality of flow channels along the axis of the outlet, wherein a cross-sectional shape of the outputs is one shape for all of the outputs or different shapes for different ones of the outputs.

Additionally or alternatively, in this or other embodiments, the forming the monolithic main body includes forming the plurality of flow channels such that a cross-sectional shape of the plurality of flow channels is one shape or more than one shape.

Additionally or alternatively, in this or other embodiments, the forming the monolithic main body includes forming the plurality of passages such that a width of the plurality of passages, which is defined for each of the plurality of passages as a distance between the first side and the second side, is one value for all of the plurality of passages or a different value for different ones of the plurality of passages.

### BRIEF DESCRIPTION OF THE DRAWINGS

The following descriptions should not be considered limiting in any way. With reference to the accompanying drawings, like elements are numbered alike:
FIG. 1 shows a heat exchanger according to one or more embodiments;
FIG. 2 is an isometric view of the heat exchanger according to one or more embodiments;
FIG. 3 is a cross sectional view showing aspects of the main body of the heat exchanger according to one or more embodiments;
FIG. 4 is a cross-sectional view showing aspects of the main body of the heat exchanger according to one or more embodiments; and
FIG. 5 is a cross-sectional view showing aspects of the main body of the heat exchanger according to one or more embodiments.

### DETAILED DESCRIPTION

A detailed description of one or more embodiments of the disclosed apparatus and method are presented herein by way of exemplification and not limitation with reference to the Figures.

As previously noted, heat exchangers facilitate heat transfer between two materials and are widely used in different applications. Embodiments of the systems and methods detailed herein relate to a spiral heat exchanger with a monolithic phase change material chamber. Unlike a typical heat exchanger with separate flow paths for two different materials that transfer heat between them, the heat exchanger according to one or more embodiments includes a phase change material (PCM) that does not flow through the heat exchanger. Instead, only the second material, the coolant, flows through the heat exchanger. The spiral configuration of the heat exchanger, according to one or more embodiments, is facilitated by an additive manufacturing process that results in a monolithic chamber in which the PCM resides and through which the coolant flows. The heat exchanger, according to one or more embodiments, may be part of an environmental control and life support system (ECLSS) used in a spacecraft, for example.

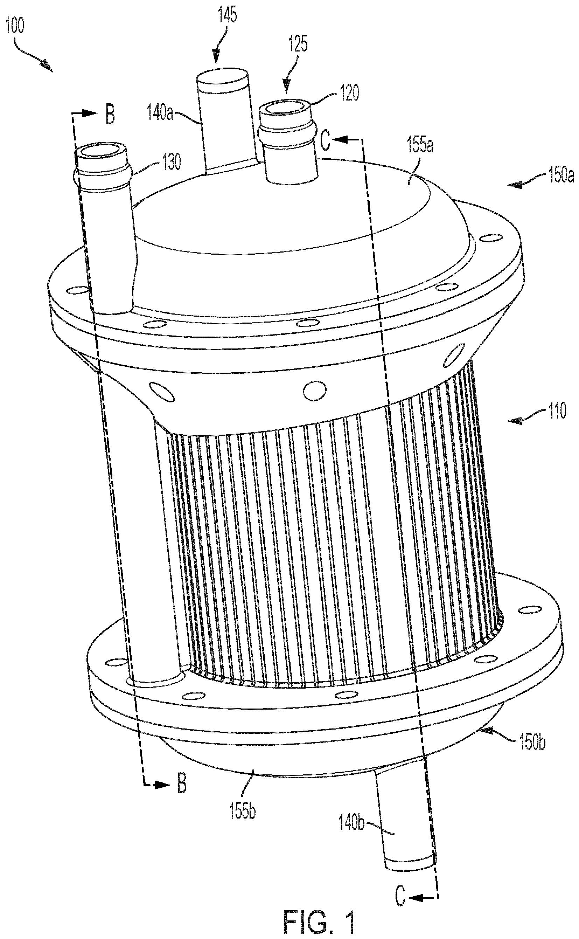

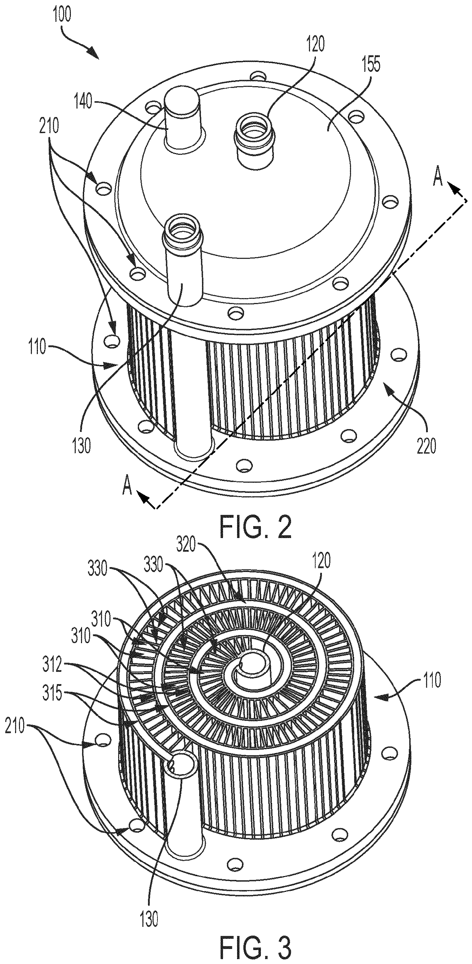

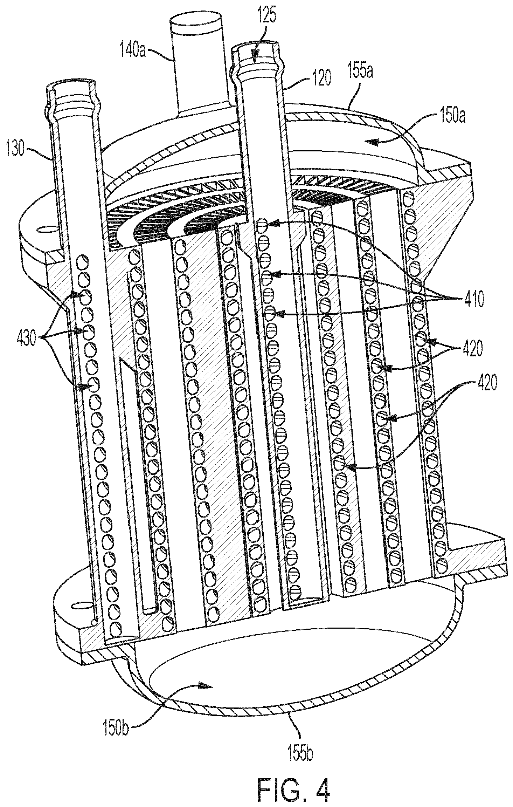

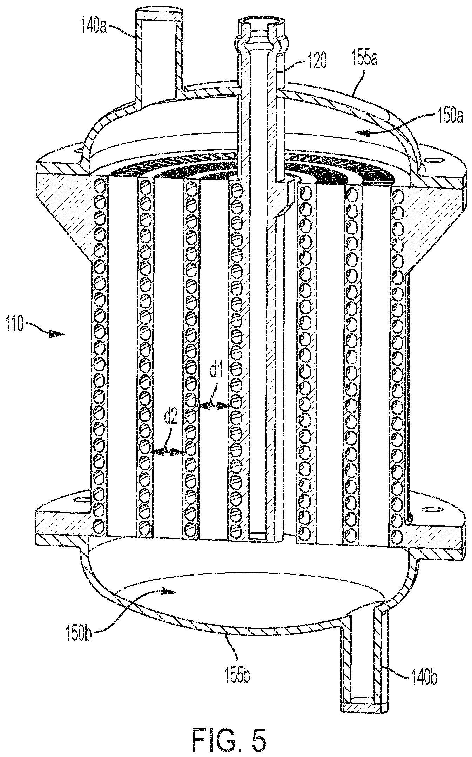

FIG. 1 shows a heat exchanger 100 according to one or more embodiments. The heat exchanger includes a main body 110 that is further detailed in the cross-sectional view through B-B shown in FIG. 4 and the cross-sectional view through C-C shown in FIG. 5. Chambers 150a and 150b (generally referred to as 150) are on opposite sides of the main body 110 (i.e., above and below the main body 110 according to the orientation shown in FIG. 1). Each of the chambers 150a, 150b is defined by a respective cover 155a, 155b (generally referred to as 155) and has a respective port 140a, 140b (generally referred to as 140). Each chamber 150 is filled with PCM 145 (e.g., wax) via the corresponding port 140. The PCM 145 is then drawn into passages 310 (FIG. 3) within the main body 110. After the PCM 145 is inserted in the chambers 150, the ports 140 are capped, as shown. The chamber 150a also includes a coolant inlet 120 and a coolant outlet 130 for coolant 125 that flows through the main body 110. The coolant flow is further discussed with reference to FIG. 3.

FIG. 2 is an isometric view of the heat exchanger 100 according to one or more embodiments. As further discussed with reference to FIG. 3, the main body 110 of the heat exchanger 100 is a monolithic structure. Each of the covers 155 on either side of the main body 110 is attached to the monolithic main body 110. Only one of the two covers 155 is visible in the view shown in FIG. 2. The holes 210 through which screws or other fasteners may be inserted to attach each of the covers 155 to the main body 110 are shown. The main body 110 includes rims 220 on either end to accommodate the holes 210. One of the rims 220 is not visible in FIG. 2. According to alternate embodiments, the covers 155 may be welded, brazed, or attached via an adhesive to fasten the covers 155 to the main body 110. The main body 110 and the covers 155 may be made of the same or different material, and the material may be aluminum, titanium, or stainless steel, for example. A cross-section A-A removing the cover 155 and rim 220 on one side is shown in FIG. 3.

FIG. 3 is a cross sectional view through A-A showing aspects of the main body 110 of the heat exchanger 100 according to one or more embodiments. Passages 310 that hold the PCM 145 are shown. Each passage 310 has a first side 312 on the inside of the main body 110 and a second side 315 on the outside of the main body 110. Passages are defined by and separated by fins 330 that extend from the first side 312 the second side 315 on either side of each passage 310. A given fin 330 is generally shared by adjacent passages 310. The first side 312 of each passage 310 is narrower than the second side 315 in the exemplary embodiment shown in FIG. 3. Each passage 310 may have a length equal to that of the main body 110 and, thus, may extend from one chamber 150 to the other.

As noted with reference to FIG. 1, PCM 145 is introduced into chambers 150 on either end of the main body 110 via ports 140 through the covers 155. By overfilling the chambers 150 (i.e., introducing more PCM 145 than can be held in the volume of the chambers 150), the PCM 145 is forced into the passages 310. The design of the main body 110 and the passages 310 and the additive manufacture to create a monolithic structure with a homogeneous volume facilitates faster and easier fill with the PCM 145 than was possible in prior designs. Prior heat exchangers include individual PCM layers that are brazed. The fill of the individual layers is time-consuming and tedious compared with the fill of the passages 310 with PCM 145 via the chambers 150. The individual layers also require multiple fill ports and, consequently, increased leak paths. The PCM 145 that fills the passages 310 acts as one of the heat exchange materials in the main body 110. As previously noted, unlike in a typical heat exchanger in which both heat exchange materials flow, the PCM 145 does not flow but, instead, remains in the passages 310.

The coolant inlet 120 for the coolant 125 is at a center of the main body 110 while the coolant outlet 130 is at the outer surface of the main body 110. Coolant 125 may be continuously introduced into the coolant inlet 120 during operation of the heat exchanger 100. This coolant inlet 120 includes inputs 410 (FIG. 4) throughout its length to guide the coolant 125 into channels 420. Each channel 420 traverses a spiral flow path 320 from the coolant inlet 120 to the coolant outlet 130. The flow path 320 causes coolant 125 to flow adjacent to the first side 312 of a given passage 310 and then adjacent to the second side 315 of the given passage 310. Thus, this spiral flow path 320 from the center to the exterior surface results in repeated adjacent flow of coolant 125 to each passage 310 (i.e., an enhanced interaction between the materials of the heat exchanger 100). This enhanced interaction increases heat transfer in the heat exchanger 100 as compared with prior straight plate-fin heat exchangers.

The spiral need not be uniform but may be, for example, tighter near the center than at the exterior. That is, the width (i.e., distance between the first side 312 and the second side 315) of passages 310 closer to the coolant inlet 120 may be less than the width of passages 310 near the exterior of the main body 110. Accordingly, the distance between radially aligned points of the flow path 320 may increase from the center to the exterior of the main body 110. Based on the temperature difference between the coolant 125 and the PCM 145, when the coolant 125 has a higher temperature than the PCM 145, the PCM 145 takes on heat from the coolant 125 and undergoes a phase change from solid to liquid while the coolant 125 temperature remains constant. When the coolant 125 has a lower temperature than the PCM 145, the PCM 145 gives off heat and undergoes a phase change from liquid to solid while the coolant 125 once again maintains a constant temperature. This heat exchange happens within each passage 310 as the coolant 125 flows adjacent.

FIG. 4 is a cross-sectional view through B-B showing aspects of the main body 110 of the heat exchanger 100 according to one or more embodiments. The chambers 150a and 150b are exposed and the port 140b has been cut away in the view of FIG. 4. That is, the cross-section is through the coolant inlet 120 and the coolant outlet 130. The inputs 410 along the length of the coolant inlet 120 are shown. The coolant 125 entering the coolant inlet 120 is channeled via the inputs 410 into channels 420 that follow the flow path 320 from the coolant inlet 120 to the coolant outlet 130. Exemplary non-limiting coolants 125 include water, propylene glycol (PGW), and hydrofluorocarbons (HFC). At the coolant outlet 130, the coolant 125 exits the channels 420 via outputs 430 indicated in FIG. 4.

While the shape of the inputs 410 and outputs 430 and the cross-sectional shape of the channels 420 are all circular in the exemplary case shown in FIG. 4, other shapes (e.g., square, oval, hexagonal) are contemplated. Further, the cross-sectional shapes of the inputs 410 and/or outputs 430 may differ along the length of the coolant inlet 120 or coolant outlet 130, respectively. Additionally, the cross-sectional shape of the channels 420 need not be the same (as each other) and need not remain the same (over a given channel 420). Sizes, numbers, and shapes of the channels 420 from the inputs 410 to the outputs 430 may be selected to maximize heat transfer.

FIG. 5 is a cross-sectional view through C-C showing aspects of the main body 110 of the heat exchanger 100 according to one or more embodiments. The chambers 150a and 150b are exposed and the coolant outlet 130 has been cut away in the view of FIG. 5. That is, the cross-section is through the ports 140a, 140b to the chambers 150a, 150b on either end of the main body 110. As noted with reference to FIG. 3, the cross-sectional shape may vary within and among channels 420. In addition, the distance between radially aligned points of the flow path 320 may vary. In FIG. 5, exemplary distances d1, d2 between adjacent columns showing cross-sections of the channels 420 indicate this radial distance. Thus, in alternate embodiments, d1 need not be the same as d2, and d2 may be larger than d1, for example. The implementation of all the potential variations noted herein are made easier by the fact that the main body 110 is produced via additive manufacturing.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A heat exchanger comprising:
a monolithic main body (110) extending along an axis from a first end to a second end;
a plurality of flow channels (420) configured to channel a first material from an inlet to an outlet, each of the plurality of flow channels traversing a spiral flow path from the inlet at a center of the main body to the outlet at an exterior surface of the main body, wherein the plurality of flow paths are aligned along the axis; and
a plurality of passages (310) configured to hold a second material, each of the plurality of passages extending along the axis from the first end to the second end, wherein a first side and a second side, opposite the first side, of each of the passages is defined by the spiral flow path of the plurality of flow channels.

2. The heat exchanger according to claim 1, further comprising a first cover (155a) defining a first chamber at the first end of the main body and a second cover (155b) defining a second chamber at the second end of the main body.

3. The heat exchanger according to claim 2, further comprising a first port (140a) into the first chamber through the first cover and a second port (140b) into the second chamber through the second cover, and preferably wherein the first port and the second port are configured to introduce the second material into the plurality of passages.

4. The heat exchanger according to claim 2, further comprising a first rim integrally formed at the first end of the main body and a second rim integrally formed at the second end of the main body, and preferably wherein the first rim is fastened to the first cover and the second rim is fastened to the second cover.

5. The heat exchanger according to claim 2, wherein the inlet for the plurality of flow channels extends through the first cover.

6. The heat exchanger according to claim 5, further comprising inputs for the plurality of flow channels along the axis of the inlet.

7. The heat exchanger according to claim 6, wherein a cross-sectional shape of the inputs is one shape for all of the inputs or different shapes for different ones of the inputs.

8. The heat exchanger according to claim 2, wherein the outlet for the plurality of flow channels extends through the first cover, and preferably further comprising outputs for the plurality of flow channels along the axis of the outlet, and more preferably wherein a cross-sectional shape of the outputs is one shape for all of the outputs or different shapes for different ones of the outputs.

9. The heat exchanger according to any preceding claim, wherein a cross-sectional shape of the plurality of flow channels (420) is one shape or more than one shape.

10. The heat exchanger according to any preceding claim, wherein a width of the plurality of passages (310), which is defined for each of the plurality of passages as a distance between the first side and the second side, is one value for all of the plurality of passages or a different value for different ones of the plurality of passages.

11. A method of assembling a heat exchanger, the method comprising:
forming a monolithic main body extending along an axis from a first end to a second end, the main body including a plurality of flow channels configured to channel a first material from an inlet to an outlet, each of the plurality of flow channels traversing a spiral flow path from the inlet at a center of the main body to the outlet at an exterior surface of the main body, wherein the plurality of flow paths are aligned along the axis, and the main body including a plurality of passages configured to hold a second material, each of the plurality of passages extending along the axis from the first end to the second end, wherein a first end and a second end, opposite the first end, of each of the passages is defined by the spiral flow path of the plurality of flow channels;
fastening a first cover at the first end of the main body; and
fastening a second cover at the second end of the main body.

12. The method according to claim 11, further comprising integrally forming a first rim at the first end of the main body and a second rim at the second end of the main body, wherein the first rim is fastened to the first cover and the second rim is fastened to the second cover, and the fastening the first cover defines a first chamber at the first end of the main body and the fastening the second cover defines a second chamber at the second end of the main body, and preferably further comprising forming a first port in the first cover that extends into the first chamber through the first cover and forming a second port in the second cover that extends into the second chamber through the second cover.

13. The method according to claim 11, wherein the forming the monolithic main body includes forming inputs for the plurality of flow channels along the axis of the inlet, wherein a cross-sectional shape of the inputs is one shape for all of the inputs or different shapes for different ones of the inputs, and forming outputs for the plurality of flow channels along the axis of the outlet, wherein a cross-sectional shape of the outputs is one shape for all of the outputs or different shapes for different ones of the outputs.

14. The method according to claim 11, wherein the forming the monolithic main body includes forming the plurality of flow channels such that a cross-sectional shape of the plurality of flow channels is one shape or more than one shape.

15. The method according to claim 11, wherein the forming the monolithic main body includes forming the plurality of passages such that a width of the plurality of passages, which is defined for each of the plurality of passages as a distance between the first side and the second side, is one value for all of the plurality of passages or a different value for different ones of the plurality of passages.
